# EUROPEAN PATENT APPLICATION

(11) **EP 4 328 679 A1**
(43) Date of publication of application: **28.02.2024**
(21) Application number: 22814915.9
(22) Date of filing: 22.04.2022
(51) Int. Cl.: G05B 15/02, G05B 19/418

(54) **AREA PARTITION METHOD FOR HOUSEHOLD APPLIANCES, AND TERMINAL DEVICE AND READABLE STORAGE MEDIUM**

(30) Priority: 31.05.2021 CN 202110606845
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: WENG, Jinlian, Foshan, Guangdong 528311 (CN); LI, Qi, Foshan, Guangdong 528311 (CN); ZHU, Lianghong, Foshan, Guangdong 528311 (CN)
(74) Representative: Whitlock, Holly Elizabeth Ann
(86) International application number: PCT/CN2022/088552
(87) International publication number: WO 2022/252868

(57) **Abstract**

An area partition method for household appliances, and a terminal device and a readable storage medium, wherein the area partition method for household appliances is applied to a terminal device. The area partition method for household appliances comprises: displaying an appliance identifier of a target household appliance and nearby area information of the target household appliance, wherein the nearby area information comprises descriptive information of a household appliance in a nearby area (S10); classifying the household appliance in the nearby area and the target household appliance into the same target area (S20); and displaying descriptive information of the target area (S30).

## Description

The present application claims priority to Chinese Patent Application No. 202110606845.5, filed on May 31, 2021, the entire contents of which are incorporated herein by reference.

### TECHNICAL FIELD

The present application relates to the technical field of intelligent control of household appliances, in particular to an area division method for household appliances, a terminal device, and a readable storage medium.

### BACKGROUND

With the development of the Internet of Things technology, smart household appliances are widely used. When implementing various functions of smart household appliances based on user operations, it is often necessary to implement various operations based on the area of the household appliances. For example, when the user just returns home, maybe it is necessary to turn on the air conditioner, purifier, and humidifier in the living room. At this time, the household appliances can detect the user's instruction to "turn on the air conditioner, purifier, and humidifier in the living room" and realize its purpose. It can be seen that household appliances often implement various operations for users based on the area in which they are located. Therefore, when a household appliance is used, it is often necessary to divide the area where the household appliance is located. In order to divide the area where the household appliance is located, the user can be close to the household appliance and manually set the area where the household appliance is located. However, the inventors have found that the above technology has at least the following technical problem: in the case of manually setting the area of the household appliance, the efficiency of dividing the area is low.

### SUMMARY

### TECHNICAL PROBLEM

The main purpose of the present application is to provide an area division method for household appliances, terminal device and readable storage medium, aiming to solve the technical problem of low efficiency in dividing areas in the case of manually setting the areas of household appliances, and achieve the technical effect of dividing the area of each household appliance with high efficiency.

### TECHNICAL SOLUTION

In order to achieve the above purpose, the present application provides an area division method for household appliances, applied to a terminal device, including:
displaying a device identification of a target household appliance and nearby area information of the target household appliance; wherein the nearby area information comprises description information of the household appliances in a nearby area;
dividing the household appliances in the nearby area and the target household appliance into a same target area; and
displaying the description information of the target area.

In an embodiment, before the displaying the device identification of the target household appliance and the nearby area information of the target household appliance, the method further includes:
displaying binding prompt information of a searched household appliance to be bound;
in response to detecting a determination operation triggered by the binding prompt information, adding the household appliance to be bound corresponding to the determination operation to a bound household appliance set;
querying the target household appliance from the bound household appliance set; and
obtaining the nearby area information of the target household appliance.

In an embodiment, the in response to detecting the determination operation triggered by the binding prompt information, adding the household appliance to be bound corresponding to the determination operation to the bound household appliance set includes:
in response to that the determination operation triggered by the binding prompt information is detected, detecting a distance between the household appliance to be bound corresponding to the determination operation and the terminal device; and
in response to that the distance is less than or equal to a first preset distance, adding the household appliance to be bound corresponding to the determination operation to the bound household appliance set.

In an embodiment, the detecting the distance between the household appliance to be bound corresponding to the determination operation and the terminal device includes:
detecting a wireless signal strength between the household appliance to be bound corresponding to the determining operation and the terminal device; and
determining the distance corresponding to the wireless signal strength.

In an embodiment, the obtaining the nearby area information of the target household appliance includes:
obtaining the description information of the household appliances in the nearby area sent by the target household appliance; the household appliances in the nearby area being household appliances within a second preset distance of the target household appliance; and
generating the nearby area information based on the description information of the household appliances in the nearby area.

In an embodiment, the obtaining the nearby area information of the target household appliance includes:
obtaining the description information of the household appliances in the nearby area sent by the target household appliance; the household appliances in the nearby area being household appliances with a wireless signal strength greater than a second preset signal strength; and
generating the nearby area information based on the description information of the household appliances in the nearby area.

In an embodiment, the dividing the household appliances in the nearby area and the target household appliance into the same target area includes:
in response to detecting the target household appliance being associated with the target area, dividing the household appliances in the nearby area into the target area;
or, in response to detecting the target household appliance being not associated with the target area, displaying prompt information for inputting the target area;
in response to detecting the area information input through the prompt information, determining the input area information as the target area; and
dividing the household appliances in the nearby area and the target household appliance into the target area.

In an embodiment, after the displaying the description information of the target area, the method further includes:
in response to receiving a request for re-dividing the area sent by the target household appliance, displaying the prompt information of re-dividing the area; wherein, the request is sent in response to that the target household appliance detects a change of the area; the prompt information comprises re-divided area information, and the re-divided area is an area where the household appliances are located in a re-detected nearby area; and
in response to detecting a determination instruction triggered by the prompt information, dividing the target household appliance into the re-divided area.

In addition, in order to achieve the above purpose, the present application also provides a terminal device, including: a memory, a processor, and an area division program of a household appliance stored in the memory and operable in the processor, and when the area division program of the household appliance is performed by the processor, the area division method for household appliances as described above is realized.

In addition, in order to achieve the above purpose, the present application also provides a computer-readable storage medium, an area division program of a household appliance is stored thereon, and when the area division program of the household appliance is performed by a processor, the area division method for household appliances as described above is realized.

### BENEFICIAL EFFECT

The area division method, terminal device, and readable storage medium for household appliances provided by the present application, through displaying the device identification of the target household appliance and the nearby area information of the target household appliance including the description information of the household appliances in the nearby area, can make the user check the device identification of the target household appliance to know the target household appliance involved in dividing the area, and know the situation of the household appliance near the target household appliance by checking the description information. Based on this terminal device, a certain household appliance and the household appliances in the nearby area are displayed, and the household appliances in the nearby area and the target household appliances are further divided into the target area. The basic idea is to divide a certain household appliance and the household appliances in the nearby area into the same area, and display the description information of the same area, so that in an actual application scenario, the target household appliances and the nearby household appliances can be divided into the same area, without manually setting areas for all the target household appliances and the nearby household appliances, so the efficiency of division is high.

### BRIEF DESCRIPTION OF THE DRAWINGS

FIG. 1 is a schematic diagram of a hardware structure of a terminal device according to an embodiment of the present application;
FIG. 2 is a schematic flowchart of an area division method for household appliances according to an embodiment of the present application;
FIG. 3 is a schematic flowchart of the area division method for household appliances according to another embodiment of the present application;
FIG. 4 is a schematic flowchart of the area division method for household appliances according to another embodiment of the present application;
FIG. 5 is a schematic diagram of an application scenario according to an embodiment of the present application;
FIG. 6 is a schematic diagram of a list of household appliances according to an embodiment of the present application;
FIG. 7 is a schematic diagram of an area division list according to an embodiment of the present application;
FIG. 8 is a schematic diagram of an interface of a nearby household appliance according to an embodiment of the present application;
FIG. 9 is a schematic diagram of a description information interface of a target area according to an embodiment of the present application.

The realization, functional features and advantages of the present application will be further described in conjunction with the embodiments and with reference to the accompanying drawings.

### DETAILED DESCRIPTION OF THE EMBODIMENTS

It should be understood that the specific embodiments described here are only configured to explain the present application, and are not intended to limit the present application.

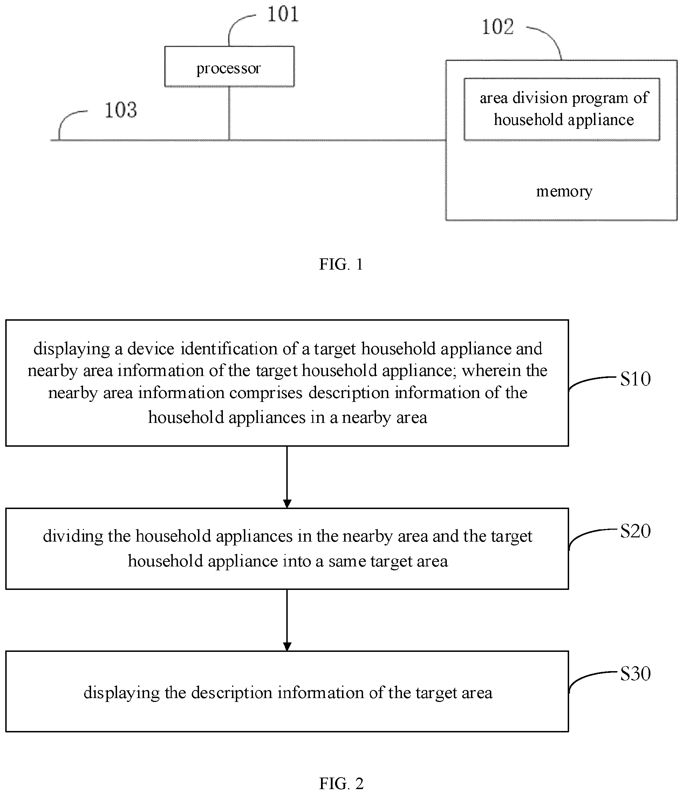

As an implementation, the structure of the terminal device involved in the area division method for the household appliances may be as shown in FIG. 1.

In an embodiment, the terminal device includes: a processor 101, such as a central processing unit (CPU), a memory 102, and a communication bus 103. The communication bus 103 is configured to realize connection and communication between these components. The processor 101 is configured to call a program to perform the function of area division of the household appliances.

The memory 102 may be a high-speed RAM memory, or a stable memory (non-volatile memory), such as a disk memory.

It can be understood that, in an embodiment, the area division program for household appliances is stored in the memory 102 of the terminal device, and when the processor 101 invokes the area division program for household appliances from the memory 102, the following operations are performed:
Displaying the device identification of the target household appliance and the nearby area information of the target household appliance, and the nearby area information including the description information of the household appliances in the nearby area;
Dividing the household appliances in the nearby area and the target household appliance into the same target area; and,
Displaying the description information of the target area.

Or, in another embodiment, the program for realizing the area division of household appliances is stored in a computer-readable storage medium. During the process of the area division of household appliances, the processor 101 of the terminal device may call the area division program for household appliances from the computer-readable storage medium to perform the above operations.

Based on the above-mentioned hardware structure of the terminal device, various embodiments of the area division method of the household appliance of the present application are provided, and the area division of the household appliance is realized respectively.

In an embodiment, referring to FIG. 2, the area division method for household appliances provided in this embodiment includes the following steps:
Step S10, displaying the device identification of the target household appliance and the nearby area information of the target household appliance, and the nearby area information including description information of the household appliances in the nearby area;
Step S20, dividing the household appliances in the nearby area and the target household appliance into the same target area; and,
Step S30, displaying the description information of the target area.

The execution subject of this embodiment is a terminal device.

A terminal device is a computer device, and the terminal device may be a computer device mainly configured to interact with a user, such as a smart phone, a tablet computer, and a wearable device. The hardware structure of the terminal device in this embodiment may include a short-distance wireless communication module and a network module. The short-distance wireless communication module is configured to send and receive short-distance wireless signals, and the network module is configured to access the network and communicate with household appliances based on the network. The short-range wireless communication module includes Bluetooth modules, near field communication (NFC) modules, ultra wide band (UWB) positioning modules, wireless hot spot (WiFi) modules or ZigBee modules. The signal strength of the wireless signal detected at a short distance can be used to determine the distance between the terminal device and the household appliance, and to detect whether the household appliance is near the terminal device.

Household appliances refer to household appliances driven by electric energy. The composition of household appliances can include modules for detecting distances, such as short-range wireless communication modules, and household appliances such as purifiers, fans, air conditioners, and humidifiers; it should be noted that the household appliances in this embodiment are mainly used in household use, but it is not limited to household use. Based on different user needs, the household appliances can also be used in some public areas.

The area division refers to the division of household appliances into a certain area, or the identification information associated with a specific area for household appliances. The area is the information configured to limit the location range of a certain household appliance. In the area division of household appliances, the area can be set as a location range that is convenient for the user to interact with the household appliance. In the household scene, before realizing the interaction between the user and the household appliances, the user will often carry out the area setting of the space based on the function of the space, for example, setting the area as living room, bedroom, study room, kitchen, etc. At this time, when performing area division of each household appliance, it can be divided into each area based on its actual location.

The target household appliance is the household appliance displayed on the terminal device. The target household appliance may be a household appliance that has been divided into areas, or a household appliance that has not been divided into areas, that is, the target household appliance may be a household appliance that has been associated with area information, or it may also be a household appliance not associated with area information; the target household appliance may communicate with the terminal device based on a short-distance wireless communication module, for example, based on a Bluetooth module.

The device identification is the identification information of the target household appliance, which is configured to indicate the condition of the target household appliance. The device identification may include at least one of the device name, specification model, device number, and device manufacturer. The device identification may also include icons and other images information.

The nearby area information is configured to indicate the relevant information in the area near the target household appliance, and the nearby area information includes the description information of the household appliance in the nearby area. The nearby area refers to the area that is relatively close in space, and the range consisting of the target household appliance as the center and the preset distance as the radius can be used as the nearby area. For example, in a household scene, the preset distance can be set to 2m, and the nearby area of the target household appliance is within a radius of 2m; the terminal device can obtain the distance between the target household appliance and non-target household appliance, and determine the household appliances in the nearby area based on the distance; or, it can also be based on the wireless signal strength between the target household appliance and the non-target household appliance, and indirectly reflect the distance between the target household appliance and the non-target household appliance through the wireless signal strength. In this method, there is no need to directly measure the distance parameter itself, but only need to obtain the wireless signal strength parameter. It is based on the principle that the greater the wireless signal strength, the shorter the distance. It has been determined that when the wireless signal strength between household appliances is between -65db and -50db, the distance between household appliances is relatively close, within about 3 meters, and the possibility of being in the same area is high. Because in practical application scenarios, there are often walls as separation between different areas, and this separation will lead to a decrease in wireless signal strength. Therefore, the wireless signal strength of household appliances in the same area is relatively high, and based on the wireless signal strength, it can accurately determine the household appliances in different areas.

The household appliances in the nearby area can be detected by the terminal device, or the household appliances detect the nearby household appliances and send information to the terminal device, if the terminal device detects, the terminal device needs to obtain the wireless signal strength between the household appliances, For example, to obtain the wireless signal strength between the target household appliance and each household appliance that can be detected by the target household appliance, the target household appliance sends the detected wireless signal strength of other household appliances to the terminal device. After the terminal device receives the wireless signal strength, it determines the nearby household appliances of the target household appliance based on the wireless signal strength. The household appliances whose wireless signal strength meets the preset conditions can be used as nearby household appliances. The preset condition is a preset condition for identifying whether a certain household appliance is in the nearby area of another household appliance such as the target household appliance. The preset condition can be that the wireless signal strength is in a preset range, such as a stable and strong wireless signal strength range at the same time, and the stability condition refers to the condition that the fluctuation range of the wireless signal is stable enough. For example, when the measured Bluetooth signal strength is -65db∼-50db, the signal stability is relatively high, and at the same time the strength value is relatively large. At this time, it can be determined that it meets the preset conditions; if detected by the target household appliance, the target household appliance can receive wireless signals sent by other household appliances, determine the wireless signal strength, check whether the wireless signal strength meets the preset conditions. When the wireless signal strength meets the preset conditions, it is marked as a nearby household appliance and the device information of the nearby household appliance is sent to the terminal device. The device information may include type, model, and universally unique identifier (UUID). Among them, the type is such as air conditioner, humidifier, and the UUID can also be replaced with other identification information. After the terminal device receives the information of nearby household appliances, it can directly determine the household appliances in the area near the target household appliance.

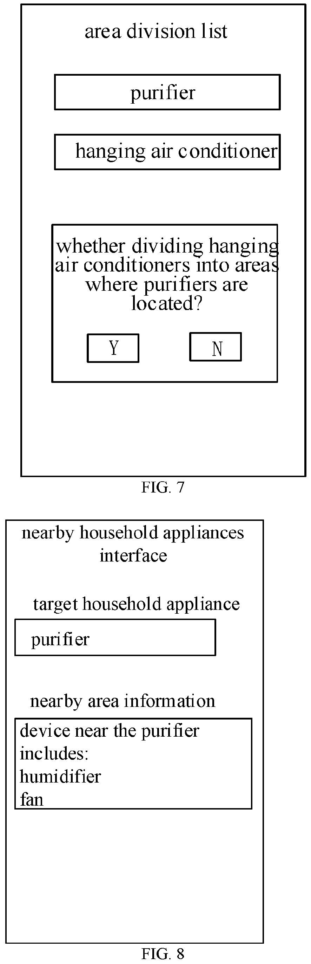

The displayed target household appliance and nearby area information may be as shown in FIG. 8. The target household appliance includes a purifier, and the nearby area information includes: describing household appliances included near the purifier, that is, a humidifier and a fan.

Before displaying the device identification of the target household appliance, the terminal device needs to determine the target household appliance, which can be determined in the following ways:
From the household appliances detected by the terminal device, the target household appliance is found to have the highest wireless signal strength. The highest wireless signal strength indicates that the household appliance is likely to be near the terminal device, that is, in the area where the user is located. At this time, if the user needs to divide the area of household appliances, the household appliances that need to be divided include the household appliances with the highest wireless signal strength, so the household appliances with the highest wireless signal strength can be used as the target household appliances, or the household appliances with the wireless signal strength within a certain range are all used as target household appliances, and the number of target household appliances can be multiple. For example, when the user is in the bedroom and needs to divide the area of household appliances, and the terminal device detects that the Bluetooth signal strength of the fan is -50db, which indicates that they are in the same area. At this time, the fan can be used as the target household appliance, and the description information of the household appliance in the area near the fan is displayed, such as the name of the purifier, and it is displayed that the purifier is the household appliance nearby the fan.

The household appliances that have already set the area are used as the target household appliances. For this method, the terminal device can first display the selection interface of the area where it is located. For example, the selection interface of the area includes household appliances such as bedrooms, living rooms, and study rooms. Afterwards, when it is detected that the user has selected the area where he or she is located as the living room, the terminal device can query the household appliances that have been set as the living room area as the target household appliances.

Any household appliance is taken as the target household appliance. For this method, the terminal device can query any detectable household appliance as the target household appliance. After the terminal device selects the target household appliance, it can obtain the nearby area information of the target household appliance. The method may be to send a request to the target household appliance to obtain information about nearby household appliances, and the target household appliance detects a nearby household appliance that meets the preset conditions based on the wireless signal strength and then returns the information of the nearby household appliance, so that even if the user is not in the area where the target household appliance is located or does not manually select the area, he can still obtain the target household appliance and divide the target household appliance and the household appliances in the nearby area into the same target area.

When dividing the household appliances in the nearby area and the target household appliances into the same target area, it can be automatically divided, or the divided prompt information can be displayed first, and when a confirmation instruction for the prompt information is detected, the target household appliance and the household appliances in the nearby area are divided into the same target area; when dividing the target area, if the target household appliance has already set an area, then the household appliances in the nearby area can be directly divided into the area of the target household appliance. If the target household appliance is the set area, then it can be divided into the default area first, and the specific name of the area can not be set in the default area. For example, the default area can be directly set to "same area" instead of the specific living room, bedroom, etc., and then the prompt information for setting the area can be displayed, and the area entered by the user can be detected, and the target area can be updated to the area entered by the user.

The terminal device can pre-store the device identification of the target household appliance. In addition, the terminal device can also obtain the device identification based on the following methods:
The device identification is obtained based on a computer network, and the target household appliance includes a network module; the network module can be a wired network module or a wireless network module, and the wireless network module can be an IoT module that supports both wireless local area and Bluetooth. The target household appliance is connected to the network by the wired network module or wireless network module. The network mainly refers to the Internet. In some scenarios, if the security requirements are high, a local area network can also be used. In the case of a local area network, only devices connected to the local area network at the same time can communicate with each other. In the case of access to the Internet, the terminal device can communicate with the household appliance to be divided based on the Internet. Since the computer network is configured to achieve communication, the distance between the target household appliance and the terminal device is not limited. Therefore, in the actual application scenario, the terminal device can be a variety of devices configured to interact with users, as long as it can access the network, it can be used as a terminal device, and the terminal device obtains device information through the computer network.

The device information is obtained based on the short-distance wireless communication module. The short-distance wireless communication can be a Bluetooth module, and the household appliances to be divided include a Bluetooth module; the terminal device includes a Bluetooth module, and the Bluetooth module is configured to send and receive Bluetooth broadcast signals; Bluetooth broadcast signals can include device information. Due to the short communication distance of the Bluetooth protocol, when obtaining device information based on Bluetooth, terminal devices mainly refer to user devices such as smartphones, tablets, and wearable devices that can send and receive signals based on Bluetooth. Terminal devices include specific programs for the purpose of dividing area.

It can be understood that the target household appliance may identify whether other household appliances are household appliances in the nearby area according to the signal strength corresponding to the short-distance wireless signal and according to preset conditions. The characteristics of the wireless signal strength of the household appliances near the target household appliance are relatively strong and relatively stable. Therefore, when the signal strength of any household appliance is strong enough and/or stable enough, the target household appliance can identify it as a household appliance in the nearby area.

In addition, the target household appliance can also send the household appliance information corresponding to other household appliances detected by the target household appliance to the terminal device, and the terminal device determines the household appliances in the nearby area of the target household appliance according to the wireless signal strength parameter or the distance parameter in the household appliance information.

In order to improve the accuracy of area division, when performing area division, the terminal device also needs to detect that the target household appliance and the household appliances in the nearby area will recognize each other as being in the same area or a nearby area. For example, the air conditioner will recognize the humidifier as a household appliance in the nearby area, and the humidifier recognizes the air conditioner as a household appliance in the nearby area at the same time, then the humidifier and the air conditioner are divided into the same area, or, on the basis that when the air conditioner and the humidifier identify each other as household appliances in the nearby area, at this time, the purifier and air conditioner may also recognize each other as household appliances in the nearby area, and the humidifier, air conditioner, and purifier are divided into the same area; when household appliances identify each other as nearby household appliances, they are divided into the same area. This can improve the accuracy of dividing the area and can avoid the problem of inaccurate area division caused by a certain household appliance simply identifying another household appliance as a household appliance in a nearby area.

When dividing the target household appliance and the household appliances in the nearby area into the same target area, in an embodiment, dividing the location area to which it belongs, and the identification of the area of the target household appliance and the identification of the household appliances in the nearby area are set to be the same area identification, for example, they can be set as the area of the living room.

If neither the target household appliance nor the household appliances in the nearby area have a corresponding area, the target household appliance and the household appliances in the nearby area can be divided into a certain preset area first, and a prompt message for dividing the area is generated. The prompt information may include device information of household appliances belonging to the same area, and the user may set a specific area name according to the prompt information.

In one scenario, the user divides the household appliances in the bedroom based on the terminal device. For example, the household appliances in the bedroom include humidifiers, air conditioners, and air purifiers. Since they are in the same bedroom, the humidifier, air conditioner, and air purifier detect that the signal strength is relatively strong and the signals are relatively stable. At this time, the terminal device divides the humidifier, hanging air conditioner, and air purifier in the bedroom into the same area based on the aforementioned steps, and its efficiency is relatively high.

After dividing the household appliances in the bedroom, the user then walks into the study room. At this time, the terminal device divides the household appliances in the study room. The household appliances in the study room include fans and cabinet air conditioners. Since the fans and cabinet air conditioners are in the same study room, the signal strength between each other is relatively stable and the signal strength value is relatively large. Based on the above steps, the terminal device divides the fan and the cabinet air conditioner into the same area, thereby realizing the area division of each household appliance in the study room, and the efficiency is relatively high.

Based on the above method, the user can divide the areas of the household appliances in each room respectively, and finally realize the area division of the household appliances in each area of the household.

In addition, when the terminal device detects that an area has been set for a certain household appliance when dividing the area, it will no longer divide the area of the household appliance. For example, after the user walks into the study room, it detects that an air conditioner has been set, in this case, even if the terminal device detects that the air conditioner is identified as a nearby household appliance by the fan in the study room, it will not divide the area for the air conditioner. That is, when the terminal device detects that the area information of the household appliance has been divided, it maintains the original area information of the household appliance and does not divide the area of the household appliance.

Before dividing the target household appliance and the household appliances to be divided into the same target area, it is also possible to output prompt information for dividing the area, so that the user can confirm whether the area needs to be divided according to the prompt information. When an instruction to confirm the division of the prompt message is detected, the target household appliance and the household appliances in the nearby area are divided into the same target area.

After the target household appliance and the household appliances in the nearby area are divided into the same target area, the target area may also be sent to the corresponding household appliance, so that the corresponding household appliance performs various operations according to the target area.

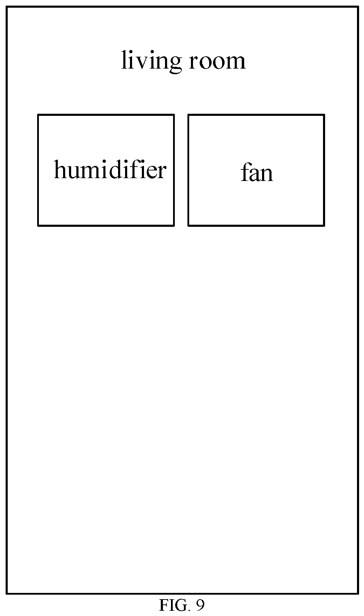

After being divided into the same target area, the description information of the target area can also be displayed, the terminal device can include the identification information of the target area and the information of the household appliances in the target area in the description information of the target area. For example, after the target household appliance and the household appliances in the nearby area are divided into the target area by the terminal device, the interface of the target area is displayed, and the icons or names of the target household appliance and the household appliances in the nearby area are displayed on the interface, so that the user can check the situation of the divided area; in addition, the terminal device can also broadcast the division of the area by voice; or, the terminal device can also send the identification information of the preset area to other devices, such as to the server. As shown in FIG. 9, the target area is the living room, and the description information of the target area includes "living room", "humidifier", and "fan".

When it is detected that the target household appliance is associated with the target area, the household appliances in the nearby area are divided into the target area; or, when it is detected that the target household appliance is not associated with the target area, a prompt message for entering the target area is displayed; When the area information input through the prompt information is detected, the input area information is determined as the target area; the household appliances in the nearby area and the target household appliances are divided into the target areas; when dividing the specific target area, if the target household appliances is associated with the target area, it can be divided directly. If the target household appliance is not associated with the target area, the target area can be set through the area input by the user.

In this embodiment, by displaying the device identification of the target household appliance and the nearby area information of the target household appliance, the nearby area information includes the description information of the household appliances in the nearby area, so that the user can view the device identification of the target household appliance to know the target household appliances involved in the area division, and by checking the description information to know the situation of the household appliances near the target household appliances. Based on this terminal device displaying a certain household appliance and its nearby household appliances, and the household appliances in the nearby area and the target household appliance are further divided into the target area. The basic idea is to divide a certain household appliance and the household appliances in the nearby area into the same area, and display the description information of the same area, so that in the actual application scenario, the target household appliance and its nearby household appliances are divided into the same area. There is no need to manually set the area for all the target household appliances and nearby household appliances, so the efficiency of division is high.

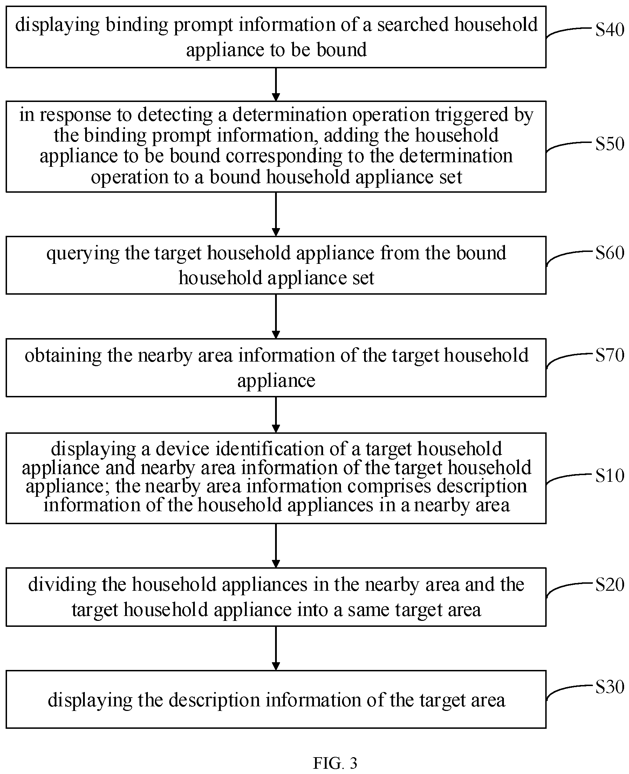

In another embodiment, referring to FIG. 3, based on the embodiment in FIG. 2 above, in this embodiment, before step S 10, it also includes:
step S40, displaying the binding prompt information of the searched household appliances to be bound;
step S50, in response to that a determination operation triggered by the binding prompt information is detected, adding the household appliance to be bound corresponding to the determination operation to a bound household appliance set;
step S60, querying the target household appliance from the bound household appliance set;
step S70, obtaining the nearby area information of the target household appliance.

In order to avoid dividing the household appliances that do not need to be divided into areas, it is necessary to bind the terminal device with the household appliances, and only realize the area division for the household appliances bound with the terminal device; in addition, another purpose of the binding is that, by binding the terminal device to the household appliance, it is possible to realize the linkage between the bound terminal device and the household appliance to achieve richer control functions, such as setting different scene modes based on the area to enhance the user experience.

The household appliances to be bound are household appliances that need to be bound. The terminal device can search for household appliances to be bound based on the wireless signal module, such as searching for Bluetooth devices based on Bluetooth, and selecting the household appliances in the Bluetooth devices as the household appliances to be bound.

The binding prompt information refers to the prompt information configured to instruct the user to bind. The binding prompt information includes, for example, the following text information, "please confirm whether to bind the current household appliance to the terminal device", and may also include an image of the household appliance information. In addition, the binding prompt information may also include or be associated with an interactive element for the user to determine whether to bind, such as a button control element. The name of the button control element is set to "confirm binding", and when a click instruction on the button control element is detected, it indicates that the user allows binding.

The confirmation operation refers to the detected operation instruction for the user to confirm the binding, and the binding operation may be a touch operation on the displayed binding prompt information, or a voice control operation.

Binding refers to the establishment of a corresponding relationship between a terminal device and a household appliance, such as matching the device identification of the terminal device with the device identification of the household appliance, obtaining the corresponding relationship, and saving the corresponding relationship; binding can also refer to establishing a corresponding relationship between a certain virtual identification information and a household appliance in the terminal device. The virtual identification information is not the device identification of the terminal device itself, but a certain identification information stored in the terminal device. For example, a certain identification information of an application program in the terminal device. The application program such as the application in the Android operating system or iOS operating system. The identification information included in the application program includes various information of the user, such as the user's mobile phone number, the user's name, and the user's account number, etc. Because in actual use, the control of household appliances is often implemented in the application program, and at the same time, the corresponding control function needs to be set according to the user's needs. Therefore, the user's identification information will be saved in the application program. The user's identification information is often the user's login account information, and the binding can be realized by establishing a corresponding relationship between the account information and the identification information of the household appliance.

The household appliance to be bound can be searched based on the short-distance wireless signal; after the terminal device detects the short-distance wireless signal, it queries the device information corresponding to the household appliance in the short-distance wireless signal, such as querying the UUID. At this time, it can identify the type of household appliances corresponding to the UUID, such as identifying the searched household appliances based on multiple UUIDs including air conditioners, humidifiers, purifiers, and fans, and further displaying the information of the searched household appliances to be bound, such as displaying air conditioners, humidifier, purifier and fan in a list device, and also outputting in the form of voice broadcast.

Before determining the searched household appliances to be bound, it may also be determined whether an operation that triggers the search for the household appliances to be bound is detected. For example, a search button is displayed in the application. When a click operation on the search button is detected, it is determined that the operation triggering the search for household appliances is detected. At this time, the searched household appliances to be bound are determined and the information about the household appliances to be bound are displayed.

When displaying the binding prompt information, you can display the information of the searched household appliances to be bound in a list form, and set the display area where the information of each household appliance is located as a clickable button control. At this time, a binding label is set in the display area where the information of an electrical appliance is located, which is configured to prompt the user to perform binding.

After the binding prompt information is displayed, the confirmation operation for binding is detected, and the confirmation operation corresponds to the binding prompt information. When the confirmation operation is detected, the household appliance to be bound corresponding to the confirmation operation is added to the bound household appliance set; the way to detect and determine the operation can be detecting whether to trigger the click instruction on the displayed button control, and when the click instruction is detected, it is determined to detect the confirmation operation; previously, button controls could be displayed in association with household appliances, such as in the same display area; the determination operation can also be detected by detecting the voice instruction, and when the voice instruction is detected, the voice information related to the determination binding in the voice instruction is extracted, and the determination operation is detected based on the voice information.

When a certain operation is detected, the household appliances to be bound corresponding to the certain operation are added to the bound household appliance set, so as to summarize the household appliances to be bound to obtain all bound household appliances. The bound household appliance set can be bound with the terminal device, or with user information, such as account information; the terminal device can also be bound with the household appliance to be bound, which can be the identification information of the household appliance to be bound with the identification information of the terminal device. For example, the physical address of the terminal device is bound with the physical address of the household appliance to be bound, or the identification information of the household appliance to be bound is bound with the user identification information stored in the terminal device. For example, the physical address of the household appliance to be bound is bound with the account information of the user in the terminal device. After binding the terminal device with the household appliance to be bound, a corresponding relationship between the household appliance to be bound and the terminal device can be established. In an embodiment, the corresponding relationship can be a data table, and further the corresponding relationship can be sent to the server or to the household appliance, so as to control the bound household appliance based on the corresponding relationship.

After binding the terminal device with the household appliances to be bound, only the bound household appliances are divided into areas, that is, only the bound household appliances are used as the target household appliances that need to be divided into areas; and the household appliances in the nearby area should also be the bound household appliances, or the household appliances in the bound household appliance set.

In order to improve the security of binding, when a certain operation triggered by the binding prompt information is detected, the binding authority of the terminal device can also be verified. The binding authority refers to the authority that allows binding, and only when it is detected that the terminal device has the binding authority to bind the household appliance to be bound, the household appliance to be bound corresponding to the determination operation is added to the bound household appliance set.

Based on different principles or scenarios, the verification of binding authority can be done in the following ways:
It is verified that whether the current terminal device can obtain various factory information of the household appliances to be bound, such as the serial number. If the terminal device can obtain various factory information of the household appliances to be bound, it indicates that it has the binding authority. In order to verify that the terminal device can obtain the factory information of the household appliance to be bound, the user can enter the factory information of the household appliance to be bound on the terminal device. The terminal detects whether the factory information of the household appliance to be bound entered by the user is consistent with the original factory information of the household appliance to be bound. And if it matches, it indicates that the binding authority is available. When verifying the binding authority based on this method, since the factory information is often not easy to obtain, the security is relatively high.

It is verified that whether the terminal device can respond to the verification information output by the household appliance to be bound. If the terminal device can respond to the verification information, it indicates that it has the binding authority. Since the verification information is actively output by the household appliance to be bound, it is easy to obtain. At this time, it is more efficient to determine the binding authority; for example, the terminal device can send a request to the household appliance to be bound, so that the household appliance to be bound can output information for authority verification; for example, the household appliance to be bound can display a specific text information, text information such as "0001", and the user will input the displayed "0001" into the terminal device; the terminal device can detect the text information entered by the user, and compare the text information entered by the user with the authority verification information sent by the household appliance to be bound. In comparison, when the two are the same, it indicates that the current terminal device has the binding authority. In addition, the text information entered by the user can also be sent to the household appliance to be bound. After the verification of the bound household appliance is successful, a prompt message of successful verification will be returned; the terminal device determines that it has the binding authority according to the prompt information of successful verification, and then the binding operation is performed; the household appliance to be bound can also display a specific image, and the terminal device captures the image; and then the terminal device compares the captured image with the displayed image sent by the household appliance to be bound. When the similarity between the two is greater than the set similarity threshold, it is determined that the terminal device has the binding authority; the terminal device can also verify with the household appliance to be bound based on short-range wireless communication.

It is verified that the area where the terminal device is located is in the preset area with binding authority. The area with binding authority refers to the area where the terminal device is close enough to the household appliance to be bound, which can be in the preset area. Within the distance range, when the terminal device is close enough to the household appliance to be bound, it is often the case that only the holder of the household appliance to be bound can perform the binding, and the holder of the non-household appliance is often not close enough. The distance is close enough, for example, it can be set to 2m; when detecting whether the area where the terminal device is located is in the area with binding authority, you can check whether the distance between the terminal device and the household appliance to be bound is within the preset range. The detection of the distance between the terminal device and the household appliance can be based on short-distance wireless communication, for example, based on ultra-wideband (UWB) for distance detection; the terminal device sends pulse information to the household appliance, and determines the distance between the terminal device and the household appliance based on the pulse signal returned by the ultra-wideband positioning tag of the household appliance; or, it can also indirectly reflect the distance between the terminal device and the household appliance based on the strength of the wireless signal such as the Bluetooth signal strength. Generally speaking, the closer the distance between the household appliance to be bound and the terminal device, the stronger the Bluetooth signal strength of the household appliance to be bound detected by the terminal device. Therefore, the distance between the terminal device and the household appliance to be bound can be determined indirectly based on the Bluetooth signal strength; in an embodiment, when detecting the binding authority of the terminal device based on the Bluetooth signal strength, it can detect whether the Bluetooth signal strength is within the set range. The set range is the preset range of the Bluetooth signal strength. The set range is determined based on the distance condition required by the binding authority. For example, if the area with binding authority is required within 2m, the setting range can be set between -65db∼-50db. When the Bluetooth signal strength is within the setting range, it indicates that the distance of the terminal device is close enough, and it has the binding authority; the verification of the binding authority in this way is more efficient, does not require user intervention, and can automatically realize the verification of the binding authority.

When the determination operation triggered by the binding prompt information is detected, the distance between the household appliance to be bound corresponding to the determination operation and the terminal device is detected; when the distance is less than or equal to the first preset distance, the household appliance to be bound corresponding to the determination operation is added to the bound household appliance set; the first preset distance is a preset distance parameter used to indicate whether the user is close enough to have binding authority. In this case, binding only when the distance is relatively close can improve the security and accuracy of binding, avoid binding unrelated household appliances, and prevent other terminals that are far away from binding.

The wireless signal strength between the household appliance to be bound and the terminal device corresponding to the operation is detected and determined; the distance corresponding to the wireless signal strength is determined. The corresponding relationship between the wireless signal strength and the distance can be measured in advance. After obtaining the wireless signal strength between the household appliance to be bound and the terminal device, the distance corresponding to the wireless signal strength can be determined based on the corresponding relationship.

When determining the target household appliance, the target household appliance from the bound household appliance set is queried and the nearby area information of the target household appliance is obtained; When querying the target household appliances, you can query the target household appliances in the area where the user is located or query any number of any target household appliances to further obtain nearby area information of the target household appliances.

When obtaining the information of the nearby area of the target household appliance, the following methods can be used:
The description information of the household appliances in the nearby area sent by the target household appliance is obtained, where the household appliances in the nearby area are household appliances within a second preset distance from the target household appliance; the nearby area information is generated based on the description information of the household appliances in the nearby area; for example , when the user is in a specific area and the terminal device is configured to divide the area, and when the target household appliance detects that other household appliances are within the second preset distance, it recognizes the other household appliance as a household appliance in the nearby area; and the second preset distance is used as the distance parameter indicating whether other household appliances are close enough to the target household appliance; when within the second preset distance range, it is very likely that the other household appliances are in the same area as the target household appliance. The second preset distance is, for example, 3m, and the target household appliance can detect the distance based on the short-range wireless signal; in addition. In addition, the terminal device can also self-detect whether the target household appliance and other household appliances are within the second preset distance based on the detected distance data between the target household appliance and other household appliances.

The description information of the household appliances in the nearby area sent by the target household appliance is obtained, where the household appliances in the nearby area are household appliances with a wireless signal strength greater than the second preset signal strength; the nearby area information is generated based on the description information of the household appliances in the nearby area; for example, when the user divides the area of the household appliance, if the target household appliance detects that the wireless signal strength with other household appliances is greater than the second preset signal strength, it indicates that the target household appliance is relatively close to other household appliances, and it is very likely that the target household appliance is in the same area as other household appliances. At this time, the target household device can directly identify other household appliances with greater than the second preset signal strength as household appliances in the nearby area, and send description information of the household appliances in the nearby area; or, the target household appliance may only send the wireless signal strength with other household appliances, and the terminal device detects whether the wireless signal strength is greater than the second preset signal strength; and if the wireless signal strength is greater than the second preset signal strength, other household appliances are identified as the household appliances in the nearby area of the target household appliance, and the nearby area information is generated based on the description information of the household appliances in the nearby area.

In this embodiment, the terminal device displays the searched binding prompt information of the household appliances to be bound; when detecting the confirmation operation triggered by the binding prompt information, the household appliances corresponding to the confirmation operation is added to the bound household appliance set; the target household appliance is queried from the bound household appliance set; the nearby area information of the target household appliance is obtained, and the area division is further realized, so that only the bound household appliances can be divided into areas, which can avoid dividing any household appliance into an area, only divide the bound household appliances into areas, and realize richer linkage functions in the case of binding terminal devices to improve user experience.

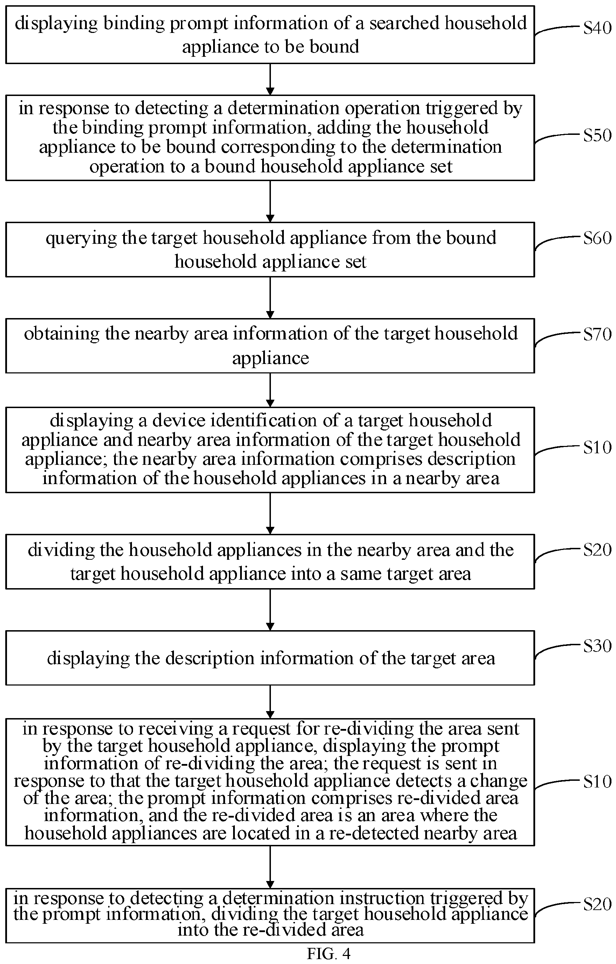

In another embodiment, referring to FIG. 4, based on any of the above embodiments, in this embodiment, after step S30, the method further includes:
step S80, when receiving the request for re-dividing the area sent by the target household appliance, the prompt information for re-dividing the area is displayed; the request is sent when the target household appliance detects that the area has changed, and the prompt information includes the information of re-dividing the area. The re-divided area is the area where the household appliances are located in the re-detected nearby area;
step S90, when a determination instruction triggered by the prompt information is detected, the target household appliance is divided into the re-divided area.

After the area is divided by the terminal device, the location of the household appliances may be changed as the user's needs change. After changing the location of the household appliances, the area needs to be re-divided. If the user does not actively re-divide, the area update of the household appliance will not be timely. If the area of the household appliance is wrong, it may further cause problems in area-based interaction and reduce the user interaction experience. In addition, if the user wants to manually set the location, he may need to approach the household appliance and re-operated based on Bluetooth, and the operation is relatively cumbersome. In order to solve the above problems, when the re-divided area needs to be automatically detected by this embodiment, the area is re-divided on the basis of the user's confirmation. The user's confirmation process is relatively simple and the operation is more convenient. It can also improve the user's experience of interacting based on the area.

In this embodiment, after the target household appliance is divided into areas, the divided areas are also updated.

After the terminal device divides the area of the target household appliance, it will send the target area to the target household appliance. After the target household appliance receives the target area sent by the terminal device, it will set its own area based on the area information and save the area information, so as to realize the division of its own area. The various interactive operations and scene settings of the user can be realized based on the area information. For example, if the user sets the sleep mode, at this time, some household appliances in the target area can be correspondingly turned off.

In order to update the area divided by the target household appliance in a timely manner, the method adopted in this embodiment is to receive the request for re-dividing the area sent by the target household appliance. Among them, as to whether it is necessary to trigger the re-division of the area of the target household appliance, the target household appliance detects whether the area has changed; when a change in the area is detected, the method of sending a request to re-divide the area to detect whether the area has changed may be to re-detect the household appliances in the nearby area at each preset time interval and obtain the area information of the household appliances in the nearby area. When it is detected that the area information of the household appliances in the nearby area is different from the previously set target area, it is determined that the detected area has changed. At this time, the area information of the household appliances in the nearby area can be determined as the re-divided area, the target household appliance sends the information of the re-divided area to the terminal device; the terminal device displays the prompt information of the re-divided area, and includes the re-divided area in the prompt information to prompt the user to re-divide the area. For example, the fan is originally located in the living room. In this case, the fan is used as the target household appliance at this time. After the fan detects that the area information of the household appliances in the nearby area changes to the bedroom after a preset time interval, and if the bedroom is different from the living room, the area change is detected. In order to improve the re-division accuracy, the fan sends a request to the terminal device to re-divide the area, and includes the area information of the bedroom in the request. When the terminal device detects that the user determines it, it can divide the target appliance into the re-divided area, that is, the bedroom. At this time, the user only needs to perform a simple confirmation operation on the terminal device, and then the area of the target household appliance can be re-divided, and the operation is simple. The number of nearby household appliances can be one or more. In order to improve the accuracy, the target household appliance can compare the target area with the area information corresponding to the household appliances in multiple nearby areas. If they are not the same, the possibility of the location change of the target household appliance is high, and at this time, a request can be further sent to the terminal device to request re-division of the area.

After receiving the request, the terminal device can output the prompt information to the user whether it needs to re-divide the area; and based on the detected operation that needs to re-divide the area, an instruction to allow the re-division of the area is generated, and the instruction to allow the re-division of the area is returned to the target household appliance; when the target household appliance receives an instruction to allow re-division of the area, the target area is re-divided, and the target area is updated to the area information corresponding to the household appliances in the nearby area, so as to be divided into the same area.

In this embodiment, when the request for re-dividing the area sent by the target household appliance is received, the prompt information for re-dividing the area is displayed; the request is sent when the target household appliance detects that the area has changed. The prompt information includes the information of the re-divided area, and the re-divided area is the area where the household appliance is located in the re-detected nearby area; when a confirmation instruction triggered by the prompt information is detected, the target household appliance is divided into the re-divided area, so that when the location of the target household appliance changes, the area of the target household appliance can be updated in a timely and simple manner, further improving the user's experience of linkage control of the household appliance based on the area of the household appliance.

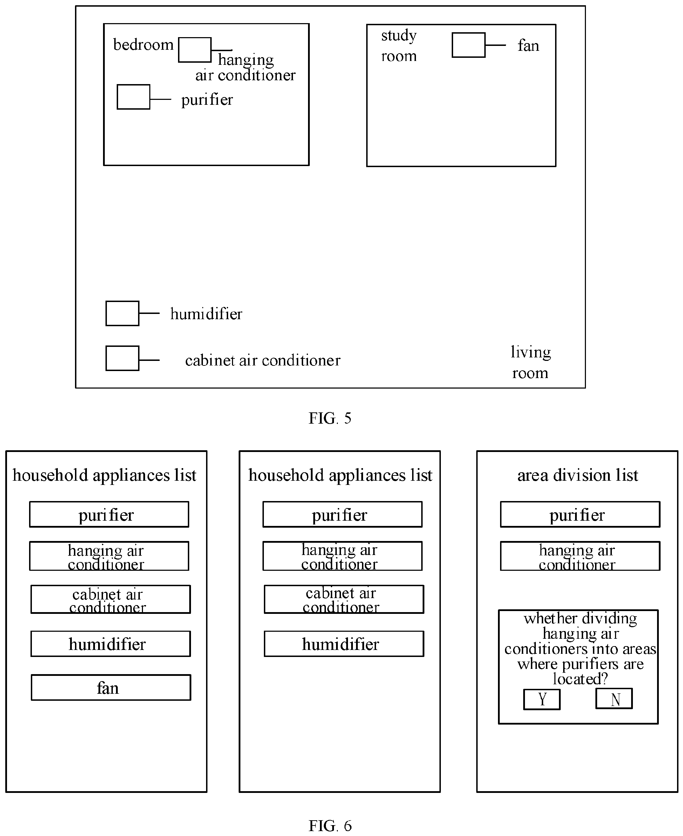

In another embodiment, as shown in FIGS. 5 to 7, a specific implementation process of the area division of household appliances is provided:
In a household scenario, as shown in FIG. 5, the scenario includes three rooms: a bedroom, a living room, and a study room. The bedroom includes a purifier and a hanging air conditioner, the study room includes a fan, and the living room includes a humidifier and a cabinet air conditioner. The user needs to use the mobile phone (terminal device) to divide the area of the purifier and the hanging air conditioner in the bedroom. At this time, the user walks into the bedroom and opens the application on the mobile phone. The application in the mobile phone searches for household appliances to be bound.

As shown in FIG. 6, the searched household appliances to be bound are displayed in a list form, that is, the following household appliances are displayed in sequence in the list: purifiers, hanging air conditioners, cabinet air conditioners, humidifiers and fans; the user clicks purifiers in the list and make a binding click operation. After the application in the mobile phone detects the user's click operation, it determines that the purifier needs to be bound. At this time, the purifier is bound to the account of the application, and the user further click on the hanging air conditioner in the list, and the mobile phone will bind the hanging air conditioner to the account.

In addition, before binding the purifier or hanging air conditioner, the mobile phone can also detect whether the signal strength of the purifier and hanging air conditioner is between -65db∼-50db. If the signal strength of both is found to be between - 65db and -50db, the binding operation is performed at this time; after the binding operation is completed, the mobile phone sends a request message to the purifier and the hanging air conditioner to obtain the device information of the household appliances detected by and located nearby the mobile phone. The detected household appliances include hanging air conditioners in the bedroom, fans in the study room, humidifiers in the living room, and cabinet air conditioners.

The specific detected signal strength is as follows:
The purifier detects that the signal strength of the hanging air conditioner in the bedroom is -62db, the signal strength of the fan in the study room is -81db, the signal strength of the cabinet air conditioner in the living room is -98db, and the signal strength of the humidifier in the living room is -89db; the purifier detects that the signal quality of the hanging air conditioner in the same bedroom is between -65db and -50db, and the purifier recognizes the hanging air conditioner as a nearby household appliance;
The hanging air conditioner detects that the signal strength of the purifier in the bedroom is -60db, the signal strength of the fan in the study room is -80db, the signal strength of the humidifier in the living room is -90db, and the signal strength of the cabinet air conditioner in the living room is -95db. Then the hanging air conditioner detects that the signal strength of the purifier is between -65db and -50db.

In the case of the above signal strength, the hanging air conditioner recognizes the purifier as a nearby household appliance, and the purifier regards the hanging air conditioner as a nearby household appliance; the mobile phone obtains the device information of the hanging air conditioner sent by the purifier and the device information of the purifier sent by the hanging air conditioner, based on the device information, it is detected that the two recognize each other as nearby household appliances, so it is determined that the purifier and the hanging air conditioner are in the same area and divided into the same area. That is, the division of the area is completed; or, as shown in FIG. 7, it is also possible to further confirm to the user whether the hanging air conditioner needs to be divided into the area where the purifier is located. When it is detected that the user clicks to confirm, the hanging air conditioner is divided into the area where the purifier is located. The mobile phone can further detect whether there is a specific area name in the purifier. If the name "bedroom" of the area where it is located already exists in the purifier, the area of the hanging air conditioner is set to "bedroom"; otherwise, the mobile phone outputs a prompt box, and the user enters the name "bedroom" of the area in the prompt box, thereby realizing the setting of the area name. It can be seen that in the whole process of dividing the area, the user only needs to be near the household appliance, and only needs to perform a simple interactive operation on the terminal device to realize the area division of each household appliance in the area, which is more efficient. Moreover, if there are more household appliances in this area, so compared with the method of manually distinguishing the area where each household appliance is located and setting the areas one by one, the efficiency is improved.

The serial numbers of the above embodiments of the present application are for description only, and do not represent the advantages and disadvantages of the embodiments.

Through the description of the above embodiments, those skilled in the art can clearly understand that the methods of the above embodiments can be implemented by means of software plus a necessary general-purpose hardware platform, and of course also by hardware, but in many cases the former is better implementation. Based on such an understanding, the technical solution of the present application can be embodied in the form of a software product in essence or the part that contributes to the related art, and the computer software product is stored in a storage medium as described above (such as ROM/RAM, magnetic disk, optical disk); several instructions are included to enable a terminal device to perform the method described in each embodiment of the present application.

It should be noted that, as used herein, the term "comprise", "include" or any other variation thereof is intended to cover a non-exclusive inclusion such that a process, method, article or system comprising a set of elements includes not only those elements, but also other elements not expressly listed, or elements inherent in the process, method, article, or system. Without further limitations, an element defined by the phrase "comprising a ..." does not preclude the presence of additional identical elements in the process, method, article or system comprising that element.

The above are only some embodiments of the present application, and are not intended to limit the patent scope of the present application. All equivalent structures or equivalent process transformations made by using the description of the present application and the accompanying drawings, or directly or indirectly used in other related technical fields, are all included in the patent protection scope of the present application in the same way.

## Claims

1. An area division method for household appliances, applied to a terminal device, **characterized by** comprising:
displaying a device identification of a target household appliance and nearby area information of the target household appliance; wherein the nearby area information comprises description information of the household appliances in a nearby area;
dividing the household appliances in the nearby area and the target household appliance into a same target area; and
displaying the description information of the target area.

2. The area division method for household appliances according to claim 1, wherein before the displaying the device identification of the target household appliance and the nearby area information of the target household appliance, the method further comprises:
displaying binding prompt information of a searched household appliance to be bound;
in response to detecting a determination operation triggered by the binding prompt information, adding the household appliance to be bound corresponding to the determination operation to a bound household appliance set;
querying the target household appliance from the bound household appliance set; and
obtaining the nearby area information of the target household appliance.

3. The area division method for household appliances according to claim 2, wherein the in response to detecting the determination operation triggered by the binding prompt information, adding the household appliance to be bound corresponding to the determination operation to the bound household appliance set comprises:
in response to that the determination operation triggered by the binding prompt information is detected, detecting a distance between the household appliance to be bound corresponding to the determination operation and the terminal device; and
in response to that the distance is less than or equal to a first preset distance, adding the household appliance to be bound corresponding to the determination operation to the bound household appliance set.

4. The area division method for household appliances according to claim 3, wherein the detecting the distance between the household appliance to be bound corresponding to the determination operation and the terminal device comprises:
detecting a wireless signal strength between the household appliance to be bound corresponding to the determining operation and the terminal device; and
determining the distance corresponding to the wireless signal strength.

5. The area division method for household appliances according to claim 2, wherein the obtaining the nearby area information of the target household appliance comprises:
obtaining the description information of the household appliances in the nearby area sent by the target household appliance; the household appliances in the nearby area being household appliances within a second preset distance of the target household appliance; and
generating the nearby area information based on the description information of the household appliances in the nearby area.

6. The area division method for household appliances according to claim 2, wherein the obtaining the nearby area information of the target household appliance comprises:
obtaining the description information of the household appliances in the nearby area sent by the target household appliance; the household appliances in the nearby area being household appliances with a wireless signal strength greater than a second preset signal strength; and
generating the nearby area information based on the description information of the household appliances in the nearby area.

7. The area division method for household appliances according to claim 1, wherein the dividing the household appliances in the nearby area and the target household appliance into the same target area comprises:
in response to detecting the target household appliance being associated with the target area, dividing the household appliances in the nearby area into the target area;
or, in response to detecting the target household appliance being not associated with the target area, displaying prompt information for inputting the target area;
in response to detecting the area information input through the prompt information, determining the input area information as the target area; and
dividing the household appliances in the nearby area and the target household appliance into the target area.

8. The area division method for household appliances according to any one of claims 1 to 7, wherein after the displaying the description information of the target area, the method further comprises:
in response to receiving a request for re-dividing the area sent by the target household appliance, displaying the prompt information of re-dividing the area; wherein, the request is sent in response to that the target household appliance detects a change of the area; the prompt information comprises re-divided area information, and the re-divided area is an area where the household appliances are located in a re-detected nearby area; and
in response to detecting a determination instruction triggered by the prompt information, dividing the target household appliance into the re-divided area.

9. A terminal device, **characterized by** comprising: a memory, a processor, and an area division program of a household appliance stored in the memory and operable in the processor, and when the area division program of the household appliance is performed by the processor, the method according to any one of claims 1 to 8 is realized.

10. A computer-readable storage medium, **characterized in that**, an area division program of a household appliance is stored thereon, and when the area division program of the household appliance is performed by a processor, the method according to any one of claims 1 to 8 is realized.
